Europäisches Patentamt

European Patent Office

Office européen des brevets

(11) Veröffentlichungsnummer: **0 362 509**
**A1**

## (12) EUROPÄISCHE PATENTANMELDUNG

(21) Anmeldenummer: **89114203.6**

(22) Anmeldetag: **01.08.89**

(51) Int. Cl.5: **B60B 3/08 , B60B 5/02**

(30) Priorität: **20.09.88 DE 8811917 U**
**04.01.89 DE 3900148**

(43) Veröffentlichungstag der Anmeldung:
**11.04.90 Patentblatt 90/15**

(84) Benannte Vertragsstaaten:
**AT BE CH DE ES FR GB GR IT LI LU NL SE**

(71) Anmelder: **Dierl, Monika**
**Felix-Dahn-Strasse 3**
**D-8060 Dachau(DE)**

Anmelder: **Obermayer, Heinz**
**Hyazinthenstrasse 4**
**D-8000 München 45(DE)**

(72) Erfinder: **Dierl, Monika**
**Felix-Dahn-Strasse 3**
**D-8060 Dachau(DE)**
Erfinder: **Obermayer, Heinz**
**Hyazinthenstrasse 4**
**D-8000 München 45(DE)**

(74) Vertreter: **Blumbach Weser Bergen Kramer**
**Zwirner Hoffmann Patentanwälte**
**Radeckestrasse 43**
**D-8000 München 60(DE)**

(54) **Scheibenrad und Verfahren zu seiner Herstellung.**

(57) Beschrieben wird ein insbesondere für Fahrräder gedachtes Scheibenrad, dessen Scheibe sich aus zwei miteinander verklebten Scheibenhälften zusammensetzt, von denen jede eine Kernscheibe aus Schaumkunststoff aufweist, die sandwichartig beidseitig mit einer faserverstärkten Kunstharzstruktur beschichtet ist. Zur Erzielung der erforderlichen Festigkeit bei möglichst geringem Gewicht besteht die Faserverstärkung auf beiden Seiten der Kernscheiben (2, 4) aus in einem regelmäßigen Muster nahezu diametral über die Kernscheibe (10) verlaufenden Rovings, vorzugsweise aus einem entsprechend um die Kernscheibe gewickelten Roving.

Fig. 2

Xerox Copy Centre

## SCHEIBENRAD UND VERFAHREN ZU SEINER HERSTELLUNG

Die Erfindung betrifft ein Scheibenrad, insbesondere für Fahrräder.

Scheibenräder werden seit einiger Zeit zunehmend für Fahrräder, vor allem im Radrennsport, anstelle der üblichen Speichenräder verwendet. Ihr großer Vorteil ist die gegenüber Speichenrädern deutlich bessere Aerodynamik, die jedoch bei den meisten gegenwärtig bekannten Scheibenrädern durch ein gegenüber Speichenrädern erhöhtes Gewicht erkauft werden muß.

Bekannte Scheibenräder bestehen aus einer oder zwei Scheiben, die anstelle von Speichen Nabe und Felge eines Rades miteinander verbinden und die Nabe zentrieren.

In der Zeitschrift "tour", Heft 10, Oktober 1988, Seiten 78 bis 84 ist der grundsätzliche Aufbau von im Handel befindlichen Scheibenrädern erläutert. Im einfachsten Fall wird danach ein Scheibenrad aus einem Schaumkern hergestellt, auf den in ein bis drei Lagen Glasfaser, Kevlar- oder Carbonmatten aufgelegt und mit Harz getränkt werden. Andere Scheibenräder weisen die aerodynamisch noch günstigere Diskusform auf und umfassen zwei Scheibenhälften, die zunächst gesondert hergestellt und dann zu der eigentlichen Scheibe zusammengeklebt werden. Dabei ist es auch bekannt, die Scheibenhälften in einer Sandwichbauweise herzustellen, bei der sich auf beiden Seiten eines Schaumkerns dünne, mit Harz getränkte Gewebematten befinden.

Wie sich aus einer Tabelle auf Seite 84 der genannten Druckschrift ergibt, beträgt das Gewicht des leichtesten der dort untersuchten Scheibenräder 910 g, während die leichtesten Speichenräder bis auf 600 g gehen.

Aufgabe der Erfindung ist es, ein Scheibenrad zu schaffen, das die für die Anwendung erforderliche Stabilität und die charakteristischen aerodynamischen Vorzüge von Scheibenrädern mit einem deutlich geringeren Gewicht vereint, als dies bei bekannten Scheibenrädern der Fall ist.

Diese Aufgabe wird erfindungsgemäß durch ein Scheibenrad gemäß Patentanspruch 1 gelöst.

Vorteilhafte Weiterbildungen der Erfindung sind in den Unteransprüchen gekennzeichnet.

Das erfindungsgemäße Scheibenrad weist zwei zu einer Einheit verklebte Scheibenhälften auf, die je mit einem Sandwichaufbau versehen sind. Jede der Scheibenhälften enthält als Kern eine Scheibe aus einem Schaumkunststoff. Zur Versteifung sind diese Schaumstoffscheiben gleichmäßig mit Fasern, einem sogenannten Roving, vorzugsweise einem Carbonfaserroving, bewickelt. Auf jeder Seite einer jeweiligen Schaumscheibe verlaufen diese Faserstränge ähnlich wie die Speichen eines Speichenrades vom Scheibenaußenrand in Richtung auf die Nabe, jedoch an einer zentralen Nabenöffnung vorbei und somit quasi-diametral über die Scheibe. Die Fasern sind mit Kunstharz getränkt. Es hat sich erwiesen, daß mit derartigen Scheibenhälften die erforderliche Stabilität mit einem gegenüber dem bisherigen Minimum nochmals um ca. 20% verringerten Gewicht erzielt wird.

Ein Ausführungsbeispiel der Erfindung wird nachfolgend anhand der Zeichnungen, die nicht maßstabsgerecht sind, näher erläutert. Es zeigen:

Fig. 1 schematisch den Aufbau des Scheibenrades in einem Axialschnitt,

Fig. 2 schematisch eine Seitenansicht zur Darstellung der Bewicklung einer Scheibenhälfte mit Rovings,

Fig. 3 in Vergrößerung die Teilansicht A aus Fig. 1, wobei die einzelnen Teile der Übersichtlichkeit halber auseinandergezogen dargestellt sind,

Fig. 4 in Vergrößerung die Teilansicht C von Fig. 1, und

Fig. 5 in Vergrößerung die Teilansicht B in Fig. 1.

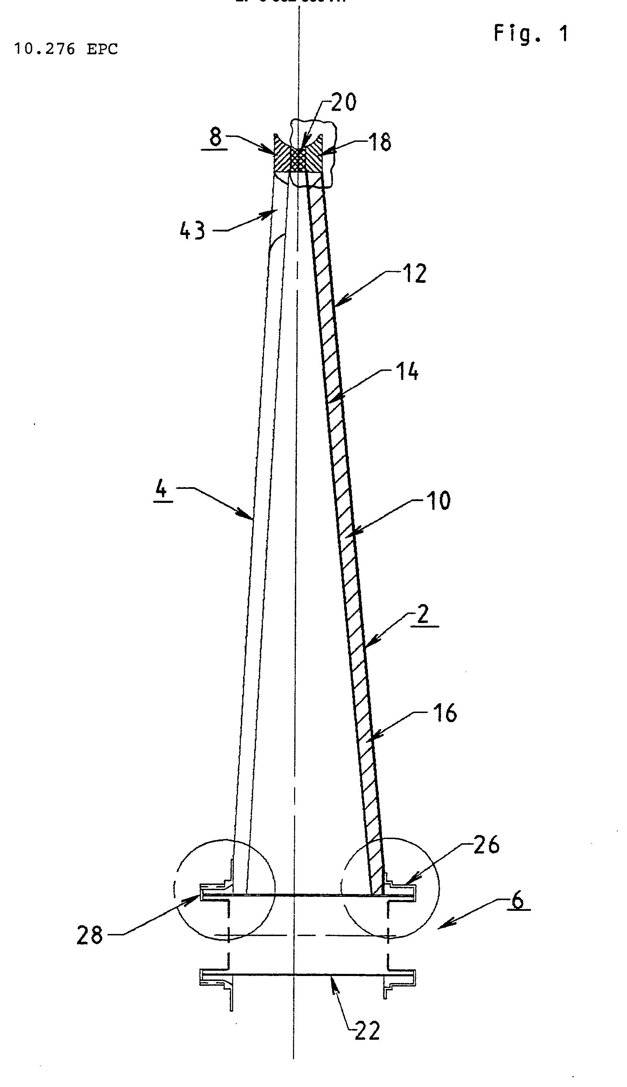

Fig. 1 zeigt schematisch eine Schnittansicht eines erfindungsgemäßen Scheibenrades, in der nur die eine Hälfte dargestellt ist. Es sei angemerkt, daß es sich bei dem dargestellten Rad um ein Hinterrad handelt, bei dem die axialen Mittelebenen von Nabe und Felge zur Aufnahme des Zahnkranzes gegeneinander versetzt sind, das heißt, die beiden Scheibenhälften sind unterschiedlich durchgebogen. Wo dies, wie beispielsweise bei einem Vorderrad, nicht erforderlich ist, kann das Rad symmetrisch sein.

Man erkennt in Fig. 1 eine rechte Scheibenhälfte 2 und eine linke Scheibenhälfte 4, die einerseits durch eine Nabe 6 und andererseits durch eine Felge 8 zu einer Einheit miteinander verbunden sind. Zwischen den beiden Scheibenhälften 2 und 4 ist die Scheibe hohl. Der Abstand zwischen den beiden Scheibenhälften nimmt von der Felge 8 zur Nabe 6 zu, so daß die Scheibe insgesamt eine Art Diskusform hat. 43 ist eine Ventilaussparung.

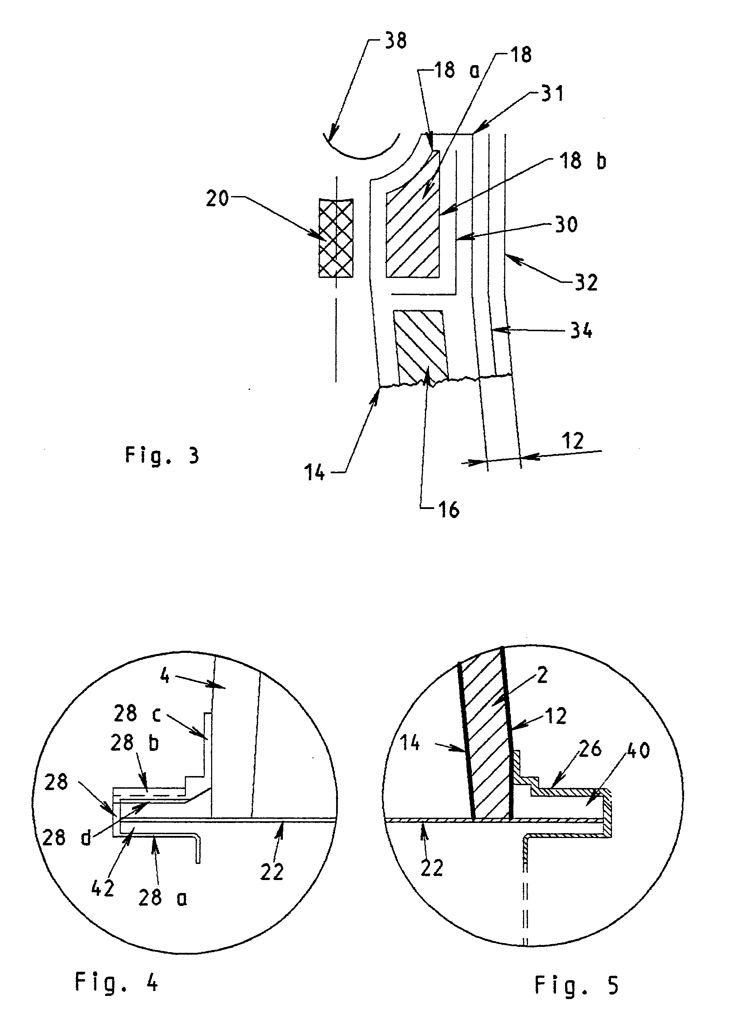

Die beiden Scheibenhälften 2 und 4 sind grundsätzlich gleich aufgebaut, so daß sich die weitere Beschreibung auf eine Scheibenhälfte beschränken kann. Die Scheibenhälfte setzt sich in Sandwichbauweise aus einer Kernscheibe 10 und je einer faserverstärkten Kunstharzstruktur 12, 14 auf den Seiten der Kernscheibe 10 zusammen. Die Kernscheibe 10 ihrerseits umfaßt als einen inneren Scheibenteil eine Leichtschaumscheibe 16, die sich von der Nabe 6 bis zu Felge 8 erstreckt, und an die sich radial außen ein Hartschaumring 18 anschließt, der im fertigen Zustand zugleich Teil der Felge 8 ist, wie aus den Fig. 1 und 3 deutlich entnehmbar.

Der Hartschaumring 18 kann beispielsweis in Form von Segmenten auf die Umfangsfläche der Leichtschaumscheibe 16 aufgeklebt sein. Seine äußere Umfangsfläche 18a ist, wie ebenfalls aus den Fig. 1 und 3 gut erkennbar, mit einem Radius versehen und stellt im fertigen Zustand des Scheibenrades eine Flanke des Felgenbettes dar. Die äußere Seitenfläche 18b des Hartschaumrings 18 bildet den von Felgenbremsen als Bremsfläche benutzten Felgenrand.

Die Hartschaumringe 18 der beiden Scheibenhälften 2 und 4 sind unter Zwischenlegen eines vorzugsweise aus Hartschaum bestehenden Felgenrings 20 miteinander verklebt und bilden so die Felge 8.

Im Bereich der Nabe 6 sind die beiden Scheibenhälften 2 und 4 mit einem Nabenrohr 22, das sich durch Nabenlöcher 24 der beiden Scheibenhälften erstreckt, verklebt. Auf die herausragenden Enden des Nabenrohrs 22 sind Nabenflansche 26 bzw. 28 aufgesetzt und mit dem Nabenrohr 22 einerseits und der jeweiligen Scheibenhälfte andererseits verklebt.

Der Aufbau einer Scheibenhälfte im einzelnen geht insbesondere aus Fig. 3 hervor, die vergrößert den oberen Teil der Scheibenhälfte 2 und den Felgenring 20 zeigt. Dabei sind zur besseren Erkennbarkeit die einzelnen Elemente in deutlichem Abstand voneinander dargestellt, obwohl sie tatsächlich eng aufeinanderliegend eine Einheit bilden.

Es sei an dieser Stelle hervorgehoben, daß die Kernscheibe nicht notwendigerweise aus den beiden gesonderten Teilen, nämlich Leichtschaumscheibe 16 einerseits und Hartschaumring 18 andererseits zusammengesetzt sein muß, wie es beim beschriebenen Ausführungsbeispiel der Fall ist. Wie schon erwähnt, setzt sich die Felge 8 des Scheibenrades aus der äußeren Randzone (hier dem Hartschaumring 18) der beiden Scheibenhälften 2 und 4 und dem dazwischen befindlichen Felgenring 20 zusammen. Im Bereich der Felge ist zur Aufnahme der Bremskräfte eine größere Festigkeit als im übrigen Scheibenteil zweckmäßig. Der Aufbau der Scheibenhälfte aus einem Leichtschaumteil und einem Hartschaumteil gemäß dem dargestellten Ausführungsbeispiel erlaubt es, diese Festigkeit im Felgenbereich mit einem minimalen Gesamtgewicht zu erzielen. Je nach Anwendungsfall ist aber grundsätzlich auch ein Aufbau der Kernscheibe aus einem einheitlichen Schaumkunststoff mittlerer Härte bzw. mittleren Raumgewichts denkbar. Bei einer praktischen Realisierung wurden mit dem dargestellten zweiteiligen Aufbau bei Verwendung eines Leichtschaums mit einem Raumgewicht in der Größenordnung von 35 kg/m³ und eines Hartschaums mit einem Raumgewicht in der Größenordnung von 65 kg/m³ gute Ergebnisse erzielt. Andere als die genannten Raumgewichte sind jedoch im Einzelfall möglich. Als Schaumkunststoff kommen Polystyrolschaum, Polyäthylenschaum, Polyurethanschaum und dergleichen in Betracht.

Wenn, wie dargestellt, die Kernscheibe 10 aus einer Leichtschaumscheibe 16 und einem sich radial außen anschließenden Hartschaumring 18 zusammengeklebt wird, ist es vorteilhaft, in der aus Fig. 3 ersichtlichen Weise einen kunstharzgetränkten Gewebestreifen 30, etwa aus einem Carbonfasergewebe, einzulegen. Der Gewebestreifen liegt zwichen den Anschlußflächen von Leichtschaumscheibe 16 und Hartschaumring 18 und ist rechtwinkelig an die äußere Seitenfläche, das heißt die spätere Bremsfläche der Felge umgeschlagen.

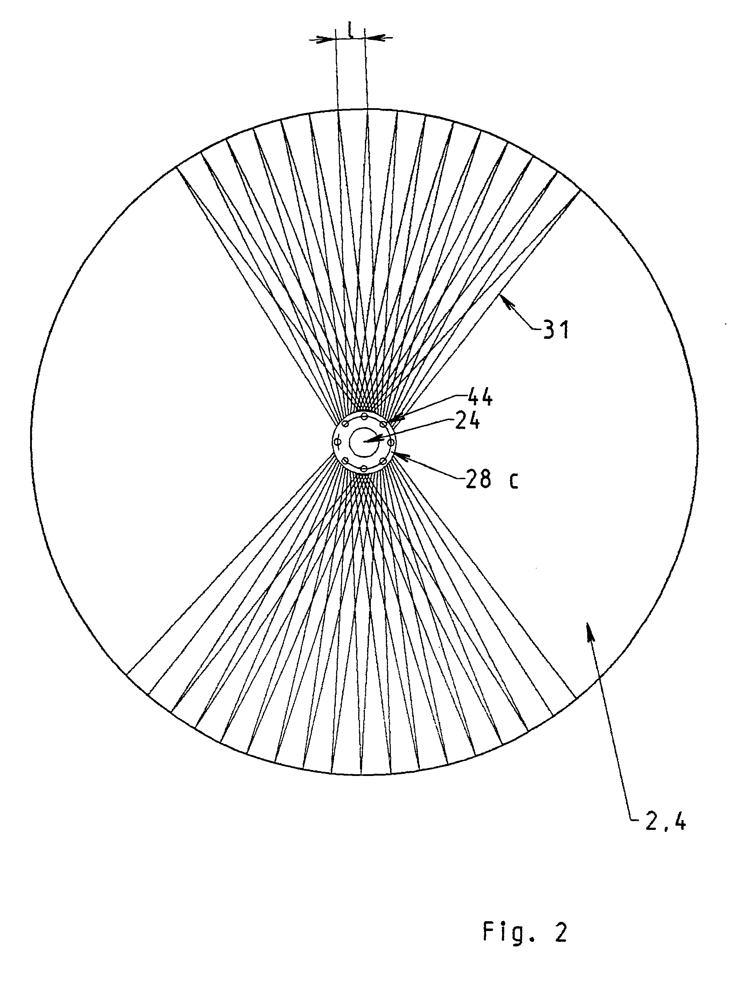

In erfindungsgemäßer Weise umfaßt die faserverstärkte Kunstharzstruktur der Scheibenhälfte, die die Kernscheibe 10 sandwichartig einschließt, ein regelmäßiges Muster harzgetränkter Faserstränge, die ähnlich wie Speichen nahezu radial vom äußeren Rand der Scheibenhälfte zur Mitte verlaufen. Fig. 2 zeigt in einer Draufsicht diese Stränge 31, die dort nur in zwei gegenüberliegenden Sektoren eingezeichnet sind, sich tatsächlich aber über die ganze Scheibenfläche erstrecken. Diese Anordnung wird im Wickelverfahren unter Verwendung eines Rovings, etwa eines Carbonfaserrovings, hergestellt, der vor oder nach dem Wikkeln mit einem aushärtenden Kunstharz getränkt wird. Die einzelnen Windungen der Wicklung verlaufen quasi-diametral, nämlich an der Nabenöffnung 24 vorbei, über die Kernscheibe. Das Raster dieser Bewicklung, entsprechend dem Abstand 1 in Fig. 2, hängt von der Stärke des Rovings und der zu erzielenden Festigkeit der Scheibe ab. Je enger das Wickelmuster, je kleiner also der Abstand 1, desto größer wird die Festigkeit, desto größer wird aber auch das Gewicht. Das Wickelmuster kann in einem jeweiligen Anwendungsfall optimiert werden. Es hat sich gezeigt, daß mit dieser Art einer faserverstärkten Kunstharzstruktur anstelle der bisherigen Verwendung eines vollflächig aufgebrachten und mit Harz getränkten Versteifungsgewebes die erforderliche Steifigkeit der Scheibe mit einem deutlich geringerem Gewicht erzielbar ist.

Damit die Außenflächen der Scheibe möglichst glatt werden, können die Scheibenhälften an ihrer Außenseite mit einer Lackschicht 32 versehen werden, unter der sich dann vorzugsweise eine dünne Glasvliesschicht 34 befindet. Diese Glasvliesschicht in einer Stärke von unter 0,5 mm, vorzugsweise etwa 0,1 mm, dient nicht der Versteifung der Scheibe, sondern der Erzielung einer festen und glatten Außenfläche. Im Einzelfall kann auf diese Glasvliesschicht verzichtet werden, nämlich insbesondere dann, wenn das die Faserstränge 31 tränkende Kunstharz flächig aufgebracht ist und die Poren der Schaumscheibe dadurch so verschlossen sind, daß eine geeignete Grundlage für die Lackschicht vorhanden ist.

Anhand eines Beispiels soll nachfolgend die Herstellung der den beschriebenen Aufbau aufweisenden Scheibenhälfte erläutert werden.

Es wurde zunächst eine kreisförmige Scheibe aus Leichtschaum mit einem Außendurchmesser von ca. 604 mm und einer Stärke von 6 mm vorbereitet und mit einer zentralen Nabenöffnung von etwa 30 mm Durchmesser versehen. Dann wurden Hartschaumsegmente, ebenfalls ca. 6 mm stark sowie 17 mm breit, in einer solchen Anzahl auf die Umfangsfläche der Leichtschaumscheibe aufgeklebt, daß sich ein geschlossener Hartschaumring ergab. Das Verkleben erfolgte mit Hilfe von Kunstharz, wobei in der beschriebenen Weise der Gewebestreifen 30 eingelegt und mit verklebt wurde. Dieser Gewebestreifen bestand im Beispielsfall aus einem Carbonfaser gewebe und war ca. 30 mm breit. Das Gewebe war 0°/90° gewebt und wurde zum leichteren Anlegen im Kreis unter 45° geschnitten. Die Verklebung erfolgt vorzugsweise unter Vakuum, damit der Kunstharzanteil möglichst gering bleibt. Nach dem Aushärten wurde die so geschaffene Kernscheibe auf einen Durchmesser von ca. 637 mm geschnitten und die Umfangsfläche des Hartschaumrings gemäß Fig. 3 mit einem nach innen weisenden Radius von ca. 9 mm versehen. Dann erfolgte die Bewicklung der Kernscheibe in der beschriebenen Weise mit einem Carbonfaserroving. Der Roving wurde straff, aber ohne besondere Spannung gewickelt. In eine der späteren Form der Scheibenhälfte entsprechende Negativform wurde eine Polyäthylenfolie eingelegt und mit Hilfe von Unterdruck an die Formfläche angepreßt. Auf die Folie wurde dann die erwähnte Lackschicht 32 aufgespritzt. Nach Antrocknen der Lackschicht wurde diese mit Epoxydharz eingestrichen und darauf ein dünnes Glasvlies gelegt, das sich mit dem Harz tränkte. In die so vorbereitete Form wurde die in diesem Zustand noch ebene, umwickelte Kernscheibe eingelegt. Darauf wurde eine zweite, vorher mit Epoxydharz eingestrichene Folie gelegt und rundherum vakuumdicht mit der ersten Folie verbunden. Durch eine Öffnung im Zentrum der Form wurde der Raum zwischen den beiden Folien evakuiert, wodurch die zweite Folie gegen die Scheibenhälfte und diese gegen die Formfläche gepreßt wurden. Nach einer von der Art des verwendeten Harzes und der Temperatur abhängigen Aushärtezeit konnte die Radhälfte aus der Form entnommen werden und durch Abziehen von den Folien befreit werden. Durch das Einpressen der umwickelten Kernscheibe in die Negativform wurden die Rovingstränge gespannt, wodurch die Festigkeit erhöht wird. Das Schneiden der Kernscheibe und/oder das Fräsen des Radius kann auch nach dem Bewickeln und Aushärten der Scheibe erfolgen.

Die beispielsweise auf voranstehend erläuterte Weise hergestellten Scheibenhälften werden anschließend mit Hilfe einer geeigneten Vorrichtung, die die richtige Zuordnung der einzelnen Teile und insbesondere einen einwandfreien Rund-und Planlauf gewährleistet, zusammengeklebt.

Wie schon ausgeführt, werden die beiden Scheibenhälften im Felgenbereich unter Zwischenlegen des Felgenrings 20 miteinander verklebt. Dabei ist der Felgenring 20, der aus demselben Material wie der Hartschaumring 18 bestehen kann, etwas radial nach innen versetzt, wie aus Fig. 3 erkennbar, so daß sich im Felgenbett eine Nut für die Aufnahme der Reifennaht ergibt. In das Felgenbett wird ein harzgetränkter Gewebestreifen 38, etwa ein Carbonfasergewebestreifen, eingelegt.

Die Verbindung im Bereich der Habe geht insbesondere aus den Fig. 4 und 5 hervor. Das Nabenrohr 22 wird durch die Nabenöffnungen der beiden Scheibenhälften gesteckt. Auf die beiden herausragenden Enden des Nabenrohrs werden die Nabenflansche 26 bzw. 28 aufgesteckt. Alle Teile sind mit Kunstharz als Klebstoff bestrichen. Die Nabenflansche 26, 28 sind je mit einer Ringnut 40, 42 versehen, die das jeweilige Ende des Nabenrohrs 22 aufnimmt. Im dargestellten Beispielsfall handelt es sich bei dem Nabenflansch 26 um ein einstückiges Teil, während der Nabenflansch 28 aus einem Schalenteil 28a und einem Flanschteil 28b zusammengesetzt ist. Das Flanschteil dient hier der Befestigung eines Zahnkranzes und ist als ein mit Gewinde versehenes Metallstück, vorzugsweise aus Aluminium hergestellt. Zur möglichst intensiven Verbindung zwischen dem Flanschteil 28b und der angrenzenden Scheibenhälfte 4 weist das Flanschteil 28b einen radial verlaufenden, an der Scheibenhälfte 4 angliegenden Ringflansch 28c auf, der mit einem Lochring (siehe Fig. 2) versehen ist, dessen Löcher 44 sich mit dem Kunstharz füllen. In der dem Nabenrohr 22 zugewandten Innenfläche des Flanschteiles 28b sind vorzugsweise Vertiefungen oder Rillen 28d ausgebildet, die ebenfalls einer guten Verbindung zum Zwecke einer sicheren Kraftübertragung dienen.

Das Nabenrohr 22 besteht vorzugsweise aus einem Carbonfaserkunststoffrohr, wobei sich eine Wandstärke von ca. 0,5 bis 0,7 mm als günstig erwiesen hat. Der Nabenflansch 26 und das Schalenteil 28a des Nabenflansches 28 sind vorzugsweise Preßteile aus Carbonfaserkunststoff.

Wenn in der voranstehenden Beschreibung von Epoxyharz die Reade ist, dann soll dies ein Beispiel für infrage kommende Kunstharz sein. Entsprechendes gilt für die erste und die zweite Polyäthylenfolie. Auch diese können durch andere Folien ersetzt werden, vorausgesetzt, daß sich die Folien nach dem Aushärten leicht von dem Kunstharz bzw. der Lackschicht der Scheibenhälfte abziehen lassen.

## Ansprüche

1. Scheibenrad, insbesondere für Fahrräder, dessen Scheibe sich aus zwei miteinander verklebten Scheibenhälften (2, 4) zusammensetzt, von denen jede eine Kernscheibe (10) aus Schaumkunststoff aufweist, die beidseitig mit einer faserverstärkten Kunstharzstruktur beschichtet ist, dadurch **gekennzeichnet,**
daß die Faserverstärkung auf beiden Seiten der Kernscheiben (2, 4) aus in einem regelmäßigen Muster nahezu diametral über die Kernscheibe (10) verlaufenden Rovings besteht.

2. Scheibenrad nach Anspruch 1, dadurch **gekennzeichnet,** daß die Faserverstärkung auf beiden Seiten der Kernscheiben (2, 4) aus einem in einem regelmäßigen Muster nahezu diametral um die Kernscheibe (2, 4) gewickelten Roving besteht.

3. Scheibenrad nach Anspruch 1 oder 2, dadurch **gekennzeichnet,** daß sich zwischen den beiden Scheibenhälften (2, 4) im Bereich des Außenrandes ein zusätzlicher Schaumkunststoffring (20) befindet, der zusammen mit den angrenzenden radial außen liegenden Teilen der Scheibenhälften die Radfelge bildet, wobei das Felgenbett mit einer fasergewebeverstärkten Kunststoffschicht überzogen ist.

4. Scheibenrad nach Anspruch 32, dadurch **gekennzeichnet,** daß die Kernscheibe (10) einen inneren Scheibenteil (16) und einen sich radial außen im Bereich der Felge (8) daran anschließenden äußeren Ringteil (18) umfaßt, und daß der Schaumkunststoff des inneren Scheibenteils (16) leichter und weicher als der des äußeren Ringsteils (18) ist.

5. Scheibenrad nach Anspruch 43, dadurch **gekennzeichnet,** daß die Außenflanken der Scheibe im Bereich des äußeren Ringteils (18) mit einer fasergewebeverstärkten Kunstharzschicht (30) überzogen sind.

6. Scheibenrad nach einem der vorhergehenden Ansprüche, dadurch **gekennzeichnet,** daß die Außenseiten der Scheibe unter einer Lackschicht (32) eine Glasvliesschicht (34) aufweisen.

7. Verfahren zur Herstellung eines Scheibenrads, dessen Scheibe sich aus zwei miteinander verklebten Scheibenhälften (2, 4) zusammensetzt, von denen jede eine Kernscheibe (10) aus Schaumkunststoff aufweist, die beidseitig mit einer faserverstärkten Kunstharzstruktur beschichtet ist, dadurch **gekennzeichnet,** daß um die Kernscheibe (10) ein Roving gewickelt wird derart, daß ausgehend von einem Punkt des Umfangs der Kernscheibe der Roving längs einer geraden Linie an einer Nabenbohrung (24) der Kernscheibe (10) vorbei zum gegenüberliegenden Scheibenrand geführt, dann in entsprechender Weise über die andere Scheibenseite geführt und dann längs einer anderen, an der Nabenbohrung (24) vorbei laufenden Linie über die erste Scheibenhälfte geführt wird, bis beide Scheibenseiten in einem regelmäßigen Muster mit quasi-diametral verlaufenden Rovingsträngen überzogen sind.

8. Verfahren nach Anspruch 7, dadurch **gekennzeichnet,** daß in eine der späteren Form einer Scheibenhälfte (2, 4) entsprechende Negativform eine Kunststoffolie eingelegt und durch Unterdruck an die Form angepreßt wird, daß die der Formfläche abgewandte Seite der Kunststoffolie dann mit Kunstharz eingestrichen wird, daß die umwickelte Kernscheibe auf die eingestrichene Folie ge legt wird, daß eine mit Kunstharz eingestrichene zweite Kunststoffolie auf die auf die erste Folie gelegte umwickelte Kernscheibe gelegt und luftdicht mit der ersten Folie verbunden wird, daß dann der Raum zwischen den beiden Folien evakuiert wird derart, daß die umwickelte Kernscheibe in die Form und die zweite Folie gegen die Kernscheibe gepreßt werden, und daß man dann unter Aufrechterhaltung des Vakuums das Kunstharz aushärten läßt.

9. Verfahren nach Anspruch 8, dadurch **gekennzeichnet,** daß vor dem Bestreichen der ersten Folie mit Kunstharz eine Lackschicht auf die Folie aufgetragen wird.

10. Verfahren nach Anspruch 9, dadurch **gekennzeichnet,** daß auf die Lackschicht ein Glasvlies aufgelegt und dieses mit dem Kunstharz eingestrichen wird.

10.276 EPC

Fig. 1

20

8

18

43

12

14

4

10

2

16

26

28

6

22

Fig. 2

EP 0 362 509 A1

Fig. 3

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 195 418  (ALSTHOM)<br>* Seite 2, Zeilen 12-22; Figur 1 *<br>--- | 1 | B 60 B  3/08<br>B 60 B  5/02 |
| Y | PATENT ABSTRACTS OF JAPAN, Band 10, Nr. 249 (M-511)[2305], 27. August 1986, Seite 149 M 511; & JP-A-61 79 636 (MAZDA MOTOR CORP.) 23-04-1986<br>* Zusammenfassung; Figuren *<br>--- | 1 | |
| A | US-A-4 732 428  (MONTE)<br>* Spalte 2, Zeilen 6-17; Figuren 1a-2b *<br>--- | 1 | |
| A | FR-A-2 570 027  (MICROMAG)<br>* Seite 4, Zeile 32 - Seite 5, Zeile 20; Figur 1 *<br>--- | 1 | |
| A | PATENT ABSTRACTS OF JAPAN, Band 10, Nr. 242 (M-509)[2298], 21. August 1986, Seite 55 M 509; & JP-A-61 72 541 (MAZDA MOTOR CORP.) 14-04-1986<br>* Zusammenfassung; Figur *<br>--- | 1,7 | |
| A | FR-A-2 265 555  (MICHELIN)<br>* Seite 1, Zeilen 21-23; Seite 2, Zeilen 13-22; Seite 4, Zeilen 14-34; Figuren 2-4 *<br>--- | 1 | **RECHERCHIERTE SACHGEBIETE (Int. Cl.5)**<br><br>B 60 B<br>B 29 D |
| A | PATENT ABSTRACTS OF JAPAN, Band 11, Nr. 94 (M-574)[2541], 25. März 1987, Seite 34 M 574; & JP-A-61 244 603 (MAZDA MOTOR CORP.) 30-10-1986<br>* Zusammenfassung; Figuren *<br>----- | 7,8 | |

Der vorliegende Recherchenbericht wurde für alle Patentansprüche erstellt

| Recherchenort | Abschlußdatum der Recherche | Prüfer |
|---|---|---|
| DEN HAAG | 19-12-1989 | AYITER I. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)